Europäisches Patentamt

European Patent Office

Office européen des brevets

(11) Veröffentlichungsnummer: **0 315 033 B1**

# EUROPÄISCHE PATENTSCHRIFT

(45) Veröffentlichungstag der Patentschrift: **08.07.92**

(21) Anmeldenummer: **88117793.5**

(22) Anmeldetag: **26.10.88**

(51) Int. Cl.⁵: **C09D 5/44**, C08G 18/64, C08G 18/48, C08G 18/10, C08G 18/28, C08G 18/80, C08G 18/32, C08G 18/72

(54) **Verfahren zur Herstellung von kationischen Lackbindemitteln auf Basis von Polyetherurethanen.**

(30) Priorität: **03.11.87 AT 2882/87**

(43) Veröffentlichungstag der Anmeldung:
**10.05.89 Patentblatt 89/19**

(45) Bekanntmachung des Hinweises auf die Patenterteilung:
**08.07.92 Patentblatt 92/28**

(84) Benannte Vertragsstaaten:
**DE ES FR GB IT SE**

(56) Entgegenhaltungen:
**FR-A- 2 102 299**
**FR-A- 2 426 718**

(73) Patentinhaber: **VIANOVA KUNSTHARZ AKTIEN-GESELLSCHAFT**
**Postfach 191 Leechgasse 21**
**A-8011 Graz(AT)**

(72) Erfinder: **Schipfer, Rudolf, Dr.**
**Ernst Haeckelstrasse 53**
**A-8010 Graz(AT)**
Erfinder: **Daimer, Wolfgang, Dipl.-Ing.**
**Rosenberggrütel 37**
**A-8010 Graz(AT)**
Erfinder: **Schmölzer, Gerhard, Dr.**
**Eisteichgasse 37**
**A-8010 Graz(AT)**

**Beschreibung**

Die Erfindung betrifft ein Verfahren zur Herstellung von kationischen Lackbindemitteln auf Basis von Polyetherurethanen, die insbesonders zur Formulierung von kathodisch abscheidbaren Überzugsmitteln geeignet sind.

Kationische Polyetherurethane werden beispielsweise gemäß der DE-PS 22 52 536 aus Epoxidharz-Aminaddukten durch Reaktion mit halbblockierten Diisocyanaten erhalten. Gemäß AT-PS 342 169 werden basische Stickstoffgruppen durch Reaktion von basischen Monoisocyanaten in verschiedene Basisharze, z. B. Epoxidharzester eingeführt. Die bei diesen Verfahren eingesetzten Epoxidharze können auch durch partielle Umsetzung mit Diphenolen, (Poly)glykolen, Diaminen oder Dicarbonsäuren unter Kettenverlängerung modifiziert sein, wie dies auch in vielen Literaturstellen beschrieben wird.

Aus der Literatur ist es bekannt, daß durch den Einsatz von verschiedenen Katalysatoren eine bevorzugte Reaktion einer der beiden NCO-Gruppen des Isophorondiisocyanats (IPDI) erreicht werden kann. So beschreiben ONO, JONES, und PAPPAS im Journal of Polymer Science: Polymer Letters Edition, Vol 23, 509 - 515 (1985), daß Dibutylzinndilaurat die Reaktion von Methanol oder tert. Butanol im wesentlichen mit der sekundären NCO-Gruppe des IPDI katalysiert. Die Katalyse mit 1,4-Diazabicyclo-2,2,2-octan (DABCO) zeigt dagegen eine deutliche Präferenz für die primäre NCO-Gruppe des IPDI.

Es wurde nun gefunden, daß man kationische Lackbindemittel auf der Basis von Polyetherurethanen mit großer Variationsbreite bie weitgehend übersichtlicher Reaktionsfolge und unter Vermeidung der Bildung unerwünschter niedrigmolekularer Nebenprodukte herstellen kann, wenn man Diisocyanate, deren NCO-Gruppen unterschiedliche Reaktionsfähigkeit aufweisen, halbseitig selektiv mit den prim. Hydroxylgruppen eines Hydroxypolyethers umsetzt und anschließend die freigebliebenen NCO-Gruppen zumindest anteilig mit einer protonierbaren Aminverbindung umsetzt.

Die Erfindung betrifft demgemäß ein Verfahren zur Herstellung von kationischen Lackbindemitteln auf Basis von gegebenenfalls modifizierten Polyetherurethanen, welches dadurch gekennzeichnet ist, daß man

(A) die primären Hydroxylgruppen eines, gegebenenfalls durch Kettenverlängerung modifizierten, gegebenenfalls Estergruppen aufweisenden Polyhydroxypolyethers,

(B) mit einer NCO-Gruppe eines Diisocyanats, dessen NCO-Gruppen unterschiedliche Reaktivität aufweisen, vorzugsweise in Gegenwart eines inerten Lösemittels, unter Verwendung von 0,02 bis 0,1 Mol %, bezogen auf die umzusetzenden NCO-Gruppen, von 1,4-Diazabicyclo-2,2,2-octan (DABCO) als Katalysator selektiv bei 30 bis 80 °C ganz oder anteilig umsetzt und anschließend

(C) bei 20 bis 80 °C die freien NCO-Gruppen mit primären und/oder vorzugsweise sekundären aliphatischen Aminen reagiert und gegebenenfalls

(D) die restlichen primären und/oder sekundären Hydroxylgruppen ganz oder anteilig mit halbblockierten Diisocyanaten umsetzt, mit der Maßgabe, daß die Mengenverhältnisse der Komponenten so gewählt werden, daß das Endprodukt eine Basizität aufweist, durch welche nach Protonierung eine einwandfreie Wasserverdünnbarkeit des Bindemittels gegeben ist.

Die Erfindung betrifft weiters die nach diesem Verfahren hergestellten Produkte, sowie deren Verwendung, gegebenenfalls in Kombination mit anderen Harzkomponenten, als Bindemittel für wasserverdünnbare Lacke, insbesonders für kathodisch abscheidbare Elektrotauchlakke.

Gegenüber den Verfahren, wie sie aus dem Stand der Technik bekannt sind, zeigt es sich überraschenderweise, daß die einseitige Umsetzung eines Diisocyanats bzw. die Monourethanisierung eines Polyisocyanates und die Einführung basischer Gruppen auf diesem Weg wesentlich einfacher und ohne Bildung von störenden niedermolekularen Nebenprodukten abläuft. Solche niedermolekulare, vollständig verkappte Isocyanate, insbesonders, wenn sie basische Gruppen tragen, führen bei kathodischen Beschichtungsmitteln zu Schwierigkeiten, da sie die MEQ-Stabilität, d. h. die Konstanz des Anteils an Neutralisationsmittel im Abscheidungsbad beeinflussen. Außerdem werden durch das erfindungsgemäße Verfahren die Schwierigkeiten bei der Herstellung basischer Monoisocyanate vermieden.

Die in der ersten Stufe des Verfahrens eingesetzten Polyhydroxypolyether weisen pro Molekül mindestens eine, vorzugsweise mindestens zwei primäre Hydroxylgruppen auf. Als Ausgangsmaterial für Lackbindemittel sollen sie ein Molekulargewicht von mindestens 200 aufwei sen. Im Rahmen dieser Anmeldung werden auch Produkte, die neben Hydroxyl- und Ethergruppen gegebenenfalls Estergruppen enthalten, als Polyhydroxypolyether bezeichnet.

Eine bevorzugte Gruppe dieser Polyhydroxypolyether sind Umsetzungsprodukte von Di- oder Polyglycidylverbindungen mit alpha-omega-diprimären Diolen, gegebenenfalls unter anteiliger Mitverwendung von Monoalkoholen. Die Reaktion dieser Komponenten erfolgt in bekannter Weise unter Verwendung von Katalysatoren, wie $BF_3$-Etherat.

Die eingesetzten Diglycidylverbindungen sind vorzugsweise Epoxidharze auf der Basis von Bisphenol A

2

oder Bisphenol F. Aus der Gruppe dieser Verbindungen werden insbesonders Epoxidharze mit einem Epoxidäquivalentgewicht zwischen 190 und 1000 eingesetzt. Andere Di- oder Polyglycidylverbindungen leiten sich von Glykolen bzw. Polyglykolen oder Phenolnovolaken ab, wobei diese Produkte vorteilhafterweise in Mischung mit Bisphenol-Epoxidharzen eingesetzt werden. Gegebenenfalls können als Glycidylverbindungen auch kettenverlängerte Produkte eingesetzt werden. Die entsprechenden Methoden und Rohstoffe sind dem Fachmann bekannt. Zur Kettenverlängerung werden beispielsweise Diole, Diphenole, primäre Monoamine, primär-tertiäre Diamine oder Dicarbonsäuren eingesetzt. Die Hydroxylgruppen der Produkte können auch mit partiell blockierten Isocyanatverbindungen teilweise vorreagiert werden.

Pro Mol der in der Glycidylverbindung vorhandenen Oxirangruppen wird 1 Mol der difunktionellen Hydroxylverbindung eingesetzt, wobei die gewünschten Polyether mit endständigen primären Hydroxylgruppen resultieren.

Als difunktionelle Hydroxylverbindungen werden Alkylendiole, wie Ethylenglykol und seine Homologen, sowie die entsprechenden Di-, Tri- oder Polyalkylenglykole, hydrierte Diphenole, Dialkylenglykolether von Diphenolen oder Caprolactondiole eingesetzt. Gegebenenfalls können auch Verbindungen mit mehr als 2 Hydroxylgruppen eingesetzt werden, soferne ihre tatsächliche Hydroxylfunktionalität aufgrund der Reaktivität oder aus sterischen Gründen nicht wesentlich über 2 liegt. Beispiele dafür sind Glycerin oder Trimethylolpropan.

Neben den difunktionellen Alkoholen können in untergeordnetem Ausmaß auch Monoalkohole, wie Alkanole mit mehr als 4 C-Atomen oder Glykolmonoether eingesetzt werden.

Die Einführung von primären Hydroxylgruppen kann auch durch Veresterung von Epoxidharzen mit primäre Hydroxylgruppen aufweisenden Hydroxycarbonsäuren, wie Dimethylolpropionsäure erfolgen.

Gegebenenfalls kann eine weitere Modifizierung der Polyhydroxypolyether dadurch erfolgen, daß ein Teil der primären Hydroxylgruppen mit Monoglycidylverbindungen, in Gegenwart von Katalysatoren, wie $BF_3$-Etherat, umgesetzt werden. Als Monoglycidylverbindungen werden Alkylglycidylether, wie 2-Ethylhexylglycidylether oder vorzugsweise die Glycidylester der sogenannten KOCH-Säuren, d. h. von tertiären Alkancarbonsäuren verwendet. Als eine weitere Modifizierungsmöglichkeit der Polyhydroxypolyether kann die Reaktion der primären und sekundären Hydroxylgruppen der Polyhydroxypolyether mit epsilon-Caprolacton Anwendung finden.

Eine weitere Gruppe von höhermolekularen Polyhydroxypolyethern umfaßt Reaktionsprodukte von alkoxylierten Phenolen mit Isocyanatverbindungen, vorzugsweise von Diethylen- bzw. Dipropylenglykolethern des Bisphenol A mit Diisocyanaten oder Polyisocyanaten.

Bei allen Modifikationen ist es wesentlich, daß die Komponenten und Mengenverhältnisse so gewählt werden, daß das resultierende Vorprodukt im Durchschnitt mindestens eine primäre Hydroxylgruppe pro Molekül aufweist.

Die selektive Umsetzung (B) der primären Hydroxylgruppen der Polyhydroxypolyether mit Diisocyanaten unter Erhalt einer freien NCO-Gruppe erfolgt bei 20 bis 80°C in Gegenwart von 0.02 bis 0,1 Mol % Diazabicyclooctan, bezogen auf die umzusetzenden NCO-Gruppen. Vorzugsweise werden 0,04 bis 0,08 Mol % des Katalysators eingesetzt.

Als Diisocyanate werden Produkte eingesetzt, deren NCO-Gruppen unterschiedliche Reaktivität aufweisen. Beispiele dafür sind das Isophorondiisocyanat (IPDI) oder das 2,4-Toluylendiisocyanat.

Die auf diese Weise erhaltenen, noch freie NCO-Gruppen aufweisenden Polymeren werden gemäß (C) mit NH- bzw. OH-funktionellen Reaktionspartnern umgesetzt, die noch zusätzlich eine N-basische Gruppierung tragen, die gegenüber Isocyanatgruppen reaktionsinert ist. Die reaktionsinerte N-basische Gruppierung ist eine tertiäre Alkylamingruppierung und/oder eine in Form ihres Ketimins defunktionalisierte primäre Aminogruppe. Geeignete NH- bzw. OH-funktionelle Reaktionspartner sind daher z. B. N,N-Dimethylaminopropylamin, N,N-Diethylaminopropylamin, N,N-Dimethylethanolamin, Hydroxyethylpiperazin, oder Monoethanolamin-Ketimine, Aminoethylethanolamin-Ketimine, Diethylentriamin-Ketimine. Durch die Reaktion (C) der NCO-Gruppe des Polymeren mit der NH-bzw. OH-Funktion, werden substituierte Harnstoff-bzw. Urethanbrücken gebildet und die N-basische Gruppierung, gegebenenfalls nach Hydrolyse der Ketimingruppierung, als protonisierbare Gruppe in das Polymermolekül eingeführt.

Gegebenenfalls vorhandene überschüssige NCO-Gruppen, die nicht zur Einführung N-basischer Gruppierungen dienen, können in bekannter Weise mit langkettigen Monoaminen, Alkoholen, Hydroxyethyl-(meth)acrylaten etc. umgesetzt werden.

Die Auswahl der Mengenverhältnisse in der Stufe (C) erfolgt mit der Maßgabe, daß das Reaktionsprodukt eine Aminzahl von ca. 20 bis ca. 150 mg KOH/g aufweist und das Produkt mindestens eine Basizität aufweist, durch welche nach Protonierung mit 30 - 80 Milliäquivalenten Ameisensäure oder Essigsäure pro 100 g Festharz eine einwandfreie Wasserverdünnbarkeit gegenen ist. Aus der notwendigen Anzahl an protonierbaren Gruppen ergeben sich in einfacher Weise die Mengenverhältnisse bzw. die Anzahl der reaktionswesentlichen Gruppen in jeder Verfahrensstufe. Gegebenenfalls in einer der Vorstufen eingeführte basische Gruppen sind entsprechend zu berücksichtigen.

Die Bindemittel können in Kombination mit Vernetzungskomponenten, wie blockierten Di- oder Polyisocyanaten oder solche Gruppierungen enthaltenden Polymerkomponenten verarbeitet werden.

Zur Erzielung von selbstvernetzenden Bindemitteln können die im Molekül vorhandenen Hydroxylgruppen gemäß der Verfahrensstufe (D) ganz oder teilweise mit halbblockierten Diisocyanaten in bekannter Weise umgesetzt werden.

Im Anschluß an (D) werden allfällige Ketimingruppen durch Zugabe von Wasser zu primären Aminogruppen umgewandelt. Nach Neutralisation mit organischen Carbonsäuren können die erfindungsgemäßen Bindemittel zur Formulierung von wasserverdünnbaren Lacken, insbesonders von kathodisch abscheidbaren Elektrotauchlacken, verwendet werden.

Die Arbeitsweisen für die Lackherstellung und die verwendbaren Zusatzmittel sind aus der Fachliteratur bekannt und müssen dem jeweiligen Verwendungszweck angepaßt werden. Die Grundregeln dafür sind dem Fachmann bekannt.

Die folgenden Beispiele erläutern die Erfindung, ohne sie in ihrem Umfang zu beschränken. Alle Angaben in Teilen oder Prozenten, beziehen sich, soferne nichts anderes angegeben ist, auf Gewichtseinheiten.

Liste der in den Beispielen verwendeten Abkürzungen:

| | |
|---|---|
| EPH I | Diglycidylether des Bisphenol A (EEW ca. 190) |
| EPH II | Diglycidylether des Bisphenol A (EEW ca. 475) |
| EPH III | Polyglycidylether auf Phenolnovolakbasis (EEW ca. 180) |
| CPL | epsilon-Carprolacton |
| TDI | Toluylendiisocyanat (handelsübliche 80/20 Isomerenmischung) |
| IPDI | Isophorondiisocyanat |
| DGDME | Diethylenglykoldimethylether |
| DABCO | 1,4-Diazabicyclo-2,2,2-octan, eingesetzt als 1%ige Lösung in DGDME (Die Mengenangaben in den Beispielen beziehen sich auf diese 1%ige Lösung) |
| AEOLA-KET | Aminoethanolamin - MIBK - Ketimin |
| DETAKET | Diethylentriamin - MIBK-Di-Ketimin |
| DEAPA | N,N-Diethylaminopropylamin |
| HEP | Hydroxyethylpiperazin |
| EEW | Epoxidäquivalentgewicht |
| Viskosität GH | Viskosität nach GARDNER-HOLDT (g Harzlösung + g DGDME) |
| Löslichkeit | benötigte Millimol HCOOH/100 g Festharz |
| Val EPH | Äquivalent Epoxidharz (enthaltend 1 Epoxygruppe) |

(A) Herstellung der Polyhydroxypolyether

(AA) 399 g (2,1 Val) EPH I, 1995 (4,2 Val) EPH II, 292 g (2 Mol) Adipinsäure und 268 g (2 Mol) Dimethylolpropionsäure werden in 80%iger Lösung in DGDME in Gegenwart von 0,5 Mol % (bezogen auf die Carboxylgruppen) Triethylamin als Katalysator bei 120°C bis zu einer Säurezahl von unter 3 mg KOH/g reagiert. Das Produkt hat einen Epoxidgehalt von praktisch 0. Der Ansatz wird mit DGDME auf einen Festkörpergehalt von 65 % verdünnt.

(AB) 798 g (4,2 Val) EPH I, 997,5 g (2,1 Val) EPH II werden wie bei (AA) angegeben, mit 404 g (2 Mol) Sebacinsäure und 268 g (2 Mol) Dimethylolpropionsäure umgesetzt. Anschließend wird der Ansatz innerhalb von 2 Stunden bei 90°C mit 264 g (1 Mol) eines mit Ethylenglykolmonoethylether halbseitig blockierten TDI versetzt und bis zu einem NCO-Wert von praktisch 0 reagiert. Der Ansatz wird mit DGDME auf 65 % verdünnt.

(AC) 124 g Ethylenglykol (2 Mol) werden mit 31 g DGDME und 0,4 g BF$_3$-Etherat auf 60°C erwärmt und innerhalb von 2 Stunden mit einer Lösung von 1187,5 g (2 Val) EPH II (80%ig in DGDME) versetzt und bis zu einem Epoxidgehalt von praktisch 0 reagiert. Der Ansatz wird mit DGDME auf einen Festkörpergehalt von 65 % verdünnt.

(AD) Zu der gemäß (AC) hergestellten 80%igen Lösung des Polyhydroxypolyethers werden bei 90°C innerhalb von 2 Stunden 304 g (1 Mol) eines mit 2-Ethylhexanol halbseitig blockierten TDI zugegeben und bis zu einem NCO-Wert von praktisch 0 reagiert. Der Ansatz wird mit DGDME auf einen Festkörpergehalt von 65 % verdünnt.

(AE) Zu einer 70%igen Lösung von 908,6 g (2 Mol) eines handelsüblichen Diethylenglykolethers von Bisphenol A in DGDME werden bei 120°C innerhalb von 2 Stunden 174 g (1 Mol) TDI zugegeben und bis zu einem NCO-Wert von praktisch 0 reagiert. Der Festkörpergehalt wird mit DGDME auf 70 % eingestellt.

(AF) Eine 80%ige Lösung von 760 g (4 Val) EPH I, 440 g (2 Mol) Nonylphenol und 228 g (1 Mol) Bisphenol A in DGDME wird nach Zusatz von 0,03 Mol Diethanolamin pro Oxirangruppe auf 150°C erhitzt und bis zu einem Epoxidwert von praktisch 0 reagiert. Anschließend wird der Ansatz bei 120°C mit 228 g (2 Mol) CPL und 0,02 g Zinnoktoat versetzt und bei 150°C ca. 6 bis 10 Stunden reagiert, bis der Gehalt an freiem CPL unter 0,1 % liegt (gaschromatographisch). Der Ansatz wird mit DGDME auf einen Festkörpergehalt von 80 % verdünnt.

(AG) In gleicher Weise, wie bei (AF) beschrieben, werden in 70%iger DGDME-Lösung 540 g (3 Val) EPH III, 440 g (2 Mol) Nonylphenol und 114 g (0,5 Mol) Bisphenol A reagiert. Nach Zugabe von 342 g (3 Mol) CPL und 0,03 g Zinnoktoat wird bei 150°C bis zu einem Gehalt von weniger als 0,1 % CPL reagiert. Zu dieser Lösung werden bei 80°C 146 g DGDME und innerhalb von 2 Stunden 304 g (1 Mol) eines mit 2-Ethylhexanol halbseitig blockierten TDI zugegeben und bis zu einem NCO-Wert von praktisch 0 reagiert. Der Festkörpergehalt des Ansatzes wird auf 70 % mit DGDME eingestellt.

Beispiel 1: 4735 g der 65%igen Lösung des Vorproduktes (AA) werden mit 538 g DGDME und 5,6 g DABCO versetzt. Bei 30°C werden innerhalb von 15 Minuten 222 g (1 Mol.) IPDI zugegeben und anschließend bei 40°C bis zu einem NCO-Wert von 0,77 % reagiert. Nach Kühlen auf 30°C wird der Ansatz innerhalb von 30 Minuten zu einer auf 60°C erwärmten Lösung von 216 g (0,8 NH-Äquiv.) DETAKET und 144 g DGDME zugesetzt und bis zu einem NCO-Wert von 0 reagiert.

Das Produkt weist folgende Kenndaten auf:

Festkörpergehalt:    60 %
Viskosität GH (10 + 4):    M
Aminzahl:    25 mg KOH/g
Löslichkeit:    30 mMol
pH-Wert (15%ig):    6,3

Zur Herstellung eines selbstvernetzenden Bindemittels werden zu 80 Teilen (Festharz) der oben erhaltenen Harzlösung 20 Teile eines mit 2-Ethylhexanol halbblockierten TDI bei 60°C innerhalb 3 Stunden zugegeben und bis zu einem NCO-Wert von 0 reagiert.

Beispiel 2: 3796 g der 65%igen Lösung des Vorproduktes (AB) werden mit 450 g DGDME und 5,5 g DABCO versetzt. Bei 50°C werden innerhalb von 30 Minuten 222 g (1 Mol) IPDI zugegeben und bis zu einem NCO-Wert von 0,97 % reagiert. Nach Kühlen auf 30°C wird der Ansatz einer auf 60°C erwärmten Lösung von 216 g (0,8 NH-Äquiv.) DETAKET und 144 g DGDME zugesetzt, bei 60°C bis zu einem NCO-Gehalt von 0 reagiert und anschließend weitere 3 Stunden bei 80°C gehalten.

Kenndaten des Produktes:

Festkörpergehalt:    60%
Viskosität GH (10 + 4):    N
Aminzahl:    30,8 mg KOH/g
Löslichkeit:    35 mMol
pH-Wert (15%ig):    6,1

Beispiel 3: 1652 g der 65%igen Lösung des Vorproduktes (AC) werden mit 309 g DGDME und 6,6 g DABCO versetzt. Bei 40°C werden innerhalb von 15 Minuten 226,4 g (1,2 Mol) IPDI zugegeben und bei 95°C bis zu einem NCO-Gehalt von 2,07 % reagiert. Der auf 40°C gekühlte Ansatz wird innerhalb von 30 Minuten einer auf 80°C erwärmten Mischung aus 186 g (1 NH-Äquiv.) AEOLA-KET und 123 g DGDME zugegeben, bei 60°C bis zu einem NCO-Wert von 0 reagiert und anschließend weitere 3 Stunden bei 80°C gehalten.

Kenndaten des Produktes:

Festkörpergehalt:    60 %
Viskosität GH (10 + 5):    L
Aminzahl:    37 gm KOH/g
Löslichkeit:    49 mMol
pH-Wert (15%ig):    5,1

Zur Herstellung eines selbstvernetzenden Bindemittels werden zu 80 Teilen (Festharz ) der oben erhaltenen Harzlösung 20 Teile eines mit 2-Ethylhexanol halbblockierten TDI bei 60°C innerhalb 3 Stunden zugegeben und bis zu einem NCO-Wert von 0 reagiert.

Beispiel 4: 2120 g Vorprodukt (AD) (70%ig DGDME) werden mit 319,5 g DGDME verdünnt und mit 5,5 g DABCO versetzt. Bei 40°C werden innerhalb von 30 Minuten 222 g (1 Mol) IPDI zugegeben und bis zu einem NCO-Wert von 1,41 % reagiert. Der auf 40°C gekühlte Ansatz wird innerhalb von 30 Minuten zu einer auf 60°C erwärmten Mischung aus 104 g (0,8-Äquiv.) HEP und 69 g DGDME zugegeben und bei 60°C bis zu einem NCO-Wert von 0 reagiert und anschließend 3 Stunden bei 80°C gehalten.

Kenndaten des Produktes:

| | |
|---|---|
| Festkörpergehalt: | 60 % |
| Viskosität GH (10 + 6): | I |
| Aminzahl: | 26 mg KOH/g |
| Löslichkeit: | 42 mMol |
| pH-Wert (15%ig): | 5,2 |

Zur Herstellung eines selbstvernetzenden Bindemittels werden zu 80 Teilen (Festharz) der oben erhaltenen Harzlösung 20 Teile eines mit 2-Ethylhexanol halbblockierten TDI bei 60°C innerhalb 3 Stunden zugegeben und bis zu einem NCO-Wert von 0 reagiert.

Beispiel 5: 1151 g Vorprodukt (AE), (70%ig DGDME) werden mit 147 g DGDME verdünnt und bei 40°C mit 2,4 g DABCO versetzt. Anschließend werden innerhalb 30 Minuten 111 g (0,5 Mol) IPDI zugegeben und bei 65 °C bis zu einem NCO-Wert von 1,49 % reagiert. Der Ansatz wird sofort auf 30°C gekühlt und innerhalb 30 Minuten einer auf 60°C erwärmten Lösung aus 108 g (0,4-NH Äquiv.) DETAKET und 189 g DGDME zugesetzt und die Reaktion bei 60°C bis zu einem NCO-Wert von 0 geführt.

Kenndaten des Produktes:

| | |
|---|---|
| Festkörpergehalt: | 60 % |
| Viskosität GH (10 + 1): | R |
| Aminzahl: | 44 mg KOH/g |
| Löslichkeit: | 60 mMol |
| pH-Wert (15 %ig): | 5,2 |

Zur Herstellung eines selbstvernetzenden Bindemittels werden zu 70 Teilen (Festharz) der oben erhaltenen Harzlösung 30 Teile eines mit 2-Ethylhexanol halbblockierten TDI bei 60°C innerhalb 3 Stunden zugegeben und bis zu einem NCO-Wert von 0 reagiert.

Beispiel 6: 2070 g Vorprodukt (AF), 80%ig DGDME, werden mit 874 g DGDME verdünnt und bei 40°C mit 14 g DABCO versetzt. Innerhalb von 30 Minuten werden 261 g (1,5 Mol) 2,4-Toluylendiisocyanat zugegeben und bei 40°C bis zu einem NCO-Wert von 1,96 % reagiert. Der Ansatz wird innerhalb von 30 Minuten einer auf 30°C erwärmten Lösung aus 182 g (1,4 NH-Äquiv.) DEAPA und 121 g DGDME zugesetzt und bei max. 30°C bis zu einem NCO-Wert von 0 reagiert. Der Ansatz wird dann weitere 3 Stunden bei 80°C gehalten.

Kenndaten des Produktes:

| | |
|---|---|
| Festkörpergehalt: | 60 % |
| Viskosität GH (10 + 3): | P |
| Aminzahl: | 35 mg KOH/g |
| Löslichkeit: | 61 mMol |
| pH-Wert (15%ig): | 5,7 |

Beispiel 7: 2485 g Vorprodukt (AG), 70%ig DGDME, werden mit 470 g DGDME verdünnt und bei 40°C mit 10 g DABCO versetzt. Innerhalb von 30 Minuten werden 261 g (1,5 Mol) 2,4-Toluylendiisocyanat zugegeben und bei 40°C bis zu einem NCO-Wert von 1,95 % reagiert. Der Ansatz wird innerhalb von 30 Minuten einer auf 30°C erwärmten Lösung aus 182 g (1,4 NH-Äquiv.) DEAPA und 594 g DGDME zugesetzt und bei max. 30°C bis zu einem NCO-Wert von 0 reagiert. Der Ansatz wird dann weitere 3 Stunden bei 80°C gehalten.

Zur Herstellung eines selbstvernetzenden Bindemittels werden zu 80 Teilen (Festharz) der oben erhaltenen Harzlösung 20 Teile eines mit 2-Ethylhexanol halbblockierten TDI bei 60°C innerhalb 3 Stunden zugegeben und bis zu einem NCO-Wert von 0 reagiert.

Kenndaten des Produktes:

| | |
|---|---|
| Festkörpergehalt: | 60 % |
| Viskosität GH (10 + 5): | R |
| Aminzahl: | 28 mg KOH/g |
| Löslichkeit: | 45 mMol |
| pH-Wert (15%ig): | 5,9 |

Prüfung der erfindungsgemäßen Bindemittel

Aus den Bindemitteln gemäß Beispiel 1 - 7 wurden entsprechend der nachstehenden Formulierung Lacke hergestellt. Die Bindemittel gemäß Beispiel 1, 3, 5 und 6 wurden in ihrer selbstvernetzenden Modifikation eingesetzt. Die Bindemittel gemäß Beispiel 2, 4 und 7 wurden im Verhältnis 70 : 30, 80 : 20 bzw. 75 : 25 mit einem Urethanvernetzer (siehe unten) 30 Minuten bei 60°C homogenisiert. Der Festkörpergehalt der Bindemittel wurde in allen Fällen vor der Verarbeitung auf 60 % mit DGDME eingestellt.

Urethanvernetzer: Umsetzungsprodukt von 1 Mol Trimethylolpropan mit 2,8 Mol eines mit 2-Ethylhexanol halbblockierten TDI, 70%ige Lösung in DGDME.

Lackformulierung:

| 100 | Tle | Festharz Ameisensäure entspr. Tab. 1 |
| 36,5 | Tle | Titandioxid |
| 20 | Tle | Aluminiumsilikatpigment |
| 3 | Tle | Bleisilikatpigment Dibutylzinndilaurat als Katalysator (Mengen entsprechend Tab. 1) |

Die Bindemittel werden nach Zugabe der Ameisensäure mit den Pigmenten in üblicher Weise vermahlen. Nach Zugabe des Katalysators wird der Ansatz mit deionisiertem Wasser auf einen Festkörpergehalt von 16 % verdünnt und 24 Stunden unter Rühren homogenisiert. Die Applikation erfolgt durch kathodische Elektrobeschichtung auf entfettetem, kaltgewalztem Stahlblech unter Bedingungen, die einen einwandfreien Film mit einer Trockenfilmstärke von 22 ± 2 μm ergeben.

Die Prüfergebnisse sind in der Tab. 1 zusammengefaßt.

Tabelle 1

| B | Ameisensäure mMol/100 g FH | Katalysator Tle/100 g FH | MEK rub-test (2) | SALZSPRÜHTEST (Stunden) ASTM B 117-64 (1) | | |
|---|---|---|---|---|---|---|
| | | | 160°C (1) | 150°C | 160°C | 180°C |
| 1 | 30 | 7,8 | 50 | 720 | 840 | über 45 Tage |
| 2 | 30 | 5,3 | 60 | 720 | 960 | -"- |
| 3 | 40 | 7,8 | 45 | 750 | über 45 Tage | -"- |
| 4 | 35 | 5,3 | 45 | 624 | 840 | -"- |
| 5 | 45 | 7,8 | 60 | 624 | 792 | -"- |
| 6 | 45 | 5,3 | mehr als 60 | 750 | über 45 Tage | -"- |
| 7 | 45 | 5,3 | mehr als 60 | 750 | über 45 Tage | -"- |
| FH : Festharz | | | | | | |

(1) Einbrenntemperatur (30 Minuten)
(2) MEK rub-test: Ein mit Methylethylketon getränkter Wattebausch wird mit 1 kp Belastung über den Lackfilm geführt. Angabe in "Doppelhüben" des Zeitpunktes, zu dem der Lack mit dem Fingernagel verletzbar wird.

**Patentansprüche**
**Patentansprüche für folgende Vertragsstaaten : DE, FR, GB, IT, SE**

1.  Verfahren zur Herstellung von kationischen Lackbindemitteln auf Basis von gegebenenfalls modifizierten Polyetherurethanen, dadurch gekennzeichnet, daß man
    (A) die primären Hydroxylgruppen eines, gegebenenfalls durch Kettenverlängerung modifizierten, gegebenenfalls Estergruppen aufweisenden Polyhydroxypolyethers,
    (B) mit einer NCO-Gruppe eines Diisocyanats, dessen NCO-Gruppen unterschiedliche Reaktivität aufweisen, vorzugsweise in Gegenwart eines inerten Lösemittels unter Verwendung von 0,02 bis 0,1 Mol %, bezogen auf die umzusetzenden NCO-Gruppen, von 1,4-Diazabicyclo-2,2,2-octan (DABCO) als Katalysator selektiv bei 30 bis 80°C ganz oder anteilig umsetzt und anschließend
    (C) bei 20 bis 80°C die freien NCO-Gruppen mit primären und/oder vorzugsweise sekundären aliphatischen Aminen reagiert und gegebenenfalls
    (D) die restlichen primären und/oder sekundären Hydroxylgruppen ganz oder anteilig mit halbblockierten Diisocyanaten umsetzt, mit der Maßgabe, daß die Mengenverhältnisse der Komponenten so gewählt werden, daß das Endprodukt eine Basizität aufweist, durch welche nach Protonierung eine einwandfreie Wasserverdünnbarkeit des Bindemittels gegeben ist.

2. Verfahren nach Anspruch 1, dadurch gekennzeichnet, daß man als Polyhydroxypolyether Produkte, die mindestens eine, vorzugsweise mindestens zwei primäre Hydroxylgruppen und ein Molekulargewicht von mindestens 200 aufweisen, einsetzt.

3. Verfahren nach Anspruch 2, dadurch gekennzeichnet, daß man als Polyhydroxypolyether Umsetzungsprodukte von Di- oder Polyglycidylverbindungen mit alpha-omega-diprimären Diolen und/oder Hydroxycarbonsäuren mit mindestens einer primären Hydroxylgruppe einsetzt.

4. Verfahren nach Anspruch 2, dadurch gekennzeichnet, daß man als Polyhydroxypolyether Umsetzungsprodukte von alkoxylierten Phenolen, vorzugsweise Diethylen- und/oder Dipropylenglykolethern des Bisphenol A, mit Di- und/oder Polyisocyanaten einsetzt.

5. Verfahren nach den Ansprüchen 2 bis 4, dadurch gekennzeichnet, daß Polyhydroxypolyether, die durch Umsetzung eines Teiles der primären Hydroxylgruppen mit Monoglycidylverbindungen modifiziert wurden, eingesetzt werden.

6. Verfahren nach den Ansprüchen 1 bis 5, dadurch gekennzeichnet, daß man 1,4-Diazabicyclo-2,2,2-octan (DABCO) als Katalysator in einer Menge von 0,04 bis 0,08 Mol %, bezogen auf die umzusetzenden NCO-Gruppen, einsetzt.

7. Kationische Lackbindemittel auf Basis von gegebenenfalls modifizierten Polyetherurethanen, hergestellt nach den Ansprüchen 1 bis 6.

8. Kationische Lackbindemittel nach Anspruch 7, dadurch gekennzeichnet, daß sie eine Aminzahl von 20 bis 150 mg KOH/g aufweisen und nach Protonierung mit 30 bis 80 Milliäquivalenten Ameisensäure oder Essigsäure pro 100 g Festharz einwandfrei wasserverdünnbar sind.

9. Selbstvernetzende Lackbindemittel auf der Basis von gegebenenfalls modifizierten Polyetherurethanen, hergestellt nach den Ansprüchen 1 bis 6, dadurch gekennzeichnet, daß die für eine Urethanvernetzung notwendigen blockierten Isocyanatgruppen durch Reaktion mit halbblockierten Diisocyanten eingeführt wurden.

10. Verwendung der kationischen Bindemittel nach den Ansprüchen 6 und 8, gegebenenfalls in Kombination mit anderen Bindemitteln und/oder Vernetzungskomponenten, vorzugsweise blockierten Di- oder Polyisocyanaten, zur Formulierung von wasserverdünnbaren Einbrennlacken, insbesonders kathodisch abscheidbaren Elektrotauchlacken.

**Patentansprüche für folgenden Vertragsstaat : ES**

1. Verfahren zur Herstellung von kationischen Lackbindemitteln auf Basis von gegebenenfalls modifizierten Polyetherurethanen, dadurch gekennzeichnet, daß man
(A) die primären Hydroxylgruppen eines, gegebenenfalls durch Kettenverlängerung modifizierten, gegebenenfalls Estergruppen aufweisenden Polyhydroxypolyethers,
(B) mit einer NCO-Gruppe eines Diisocyanats, dessen NCO-Gruppen unterschiedliche Reaktivität aufweisen, vorzugsweise in Gegenwart eines inerten Lösemittels unter Verwendung von 0,02 bis 0,1 Mol %, bezogen auf die umzusetzenden NCO-Gruppen, von 1,4-Diazabicyclo-2,2,2-octan (DABCO) als Katalysator selektiv bei 30 bis 80°C ganz oder anteilig umsetzt und anschließend
(C) bei 20 bis 80°C die freien NCO-Gruppen mit primären und/oder vorzugsweise sekundären aliphatischen Aminen reagiert und gegebenenfalls
(D) die restlichen primären und/oder sekundären Hydroxylgruppen ganz oder anteilig mit halbblokkierten Diisocyanaten umsetzt, mit der Maßgabe, daß die Mengenverhältnisse der Komponenten so gewählt werden, daß das Endprodukt eine Basizität aufweist, durch welche nach Protonierung eine einwandfreie Wasserverdünnbarkeit des Bindemittels gegeben ist.

2. Verfahren nach Anspruch 1, dadurch gekennzeichnet, daß man als Polyhydroxypolyether Produkte, die mindestens eine, vorzugsweise mindestens zwei primäre Hydroxygruppen und ein Molekulargewicht von mindestens 200 aufweisen, einsetzt.

3. Verfahren nach Anspruch 2, dadurch gekennzeichnet, daß man als Polyhydroxypolyether Umsetzungsprodukte von Di- oder Polyglycidylverbindungen mit alpha-omega-diprimären Diolen und/oder Hydroxycarbonsäuren mit mindestens einer primären Hydroxylgruppe einsetzt.

4. Verfahren nach Anspruch 2, dadurch gekennzeichnet, daß man als Polyhydroxypolyether Umsetzungsprodukte von alkoxylierten Phenolen, vorzugsweise Diethylen- und/ oder Dipropylenglykolethern des Bisphenol A, mit Di- und/oder Polyisocyanaten einsetzt.

5. Verfahren nach den Ansprüchen 2 bis 4, dadurch gekennzeichnet, daß Polyhydroxypolyether, die durch Umsetzungeines Teiles der primären Hydroxylgruppen mit Monoglycidylverbindungen modifiziert wurden, eingesetzt werden.

6. Verfahren nach den Ansprüchen 1 bis 5, dadurch gekennzeichnet, daß man 1,4-Diazabicyclo-2,2,2-octan (DABCO) als Katalysator in einer Menge von 0,04 bis 0,08 Mol %, bezogen auf die umzusetzenden NCO-Gruppen, einsetzt.

7. Verwendung der nach den Ansprüchen 1 bis 6 hergestellten kationischen Bindemittel, gegebenenfalls in Kombination mit anderen Bindemitteln und/oder Vernetzungskomponenten, vorzugsweise blockierten Di- oder Polyisocyanaten, zur Formulierung von wasserverdünnbaren Einbrennlacken, insbesonders kathodisch abscheidbaren Elektrotauchlacken.

**Claims**

**Claims for the following Contracting States : DE, FR, GB, IT, SE**

1. Process for preparing cationic paint binders based on optionally modified polyether urethanes, characterised in that
   (A) the primary hydroxyl groups of a polyhydroxypolyether which is optionally modified by chain lengthening and optionally contains ester groups
   (B) is wholly or partially reacted with an NCO group of a diisocyanate the NCO groups of which have different reactivities, preferably in the presence of an inert solvent, using 0.02 to 0.1 mol %, based on the NCO groups which are to be reacted, of 1,4-diazabicyclo-2,2,2-octane (DABCO) as catalyst, selectively at 30 to 80°C, and subsequently
   (C) at 20 to 80°C the free NCO groups are reacted with primary and/or preferably secondary aliphatic amines and optionally
   (D) the remaining primary and/or secondary hydroxyl groups are wholly or partially reacted with half-blocked diisocyanates, with the proviso that the proportions of the components are selected so that the end product has a basicity which will ensure that the binder can be satisfactorily diluted with water after protonation.

2. Process as claimed in claim 1, characterised in that the polyhydroxypolyethers used are products which have at least one, preferably at least two primary hydroxyl groups and a molecular weight of at least 200.

3. Process as claimed in claim 2, characterised in that the polyhydroxypolyethers used are reaction products of di- or polyglycidyl compounds with alpha-omega-diprimary diols and/or hydroxycarboxylic acids carrying at least one primary hydroxyl group.

4. Process as claimed in claim 2, characterised in that the polyhydroxypolyethers used are reaction products of alkoxylated phenols, preferably diethylene and/or dipropyleneglycolethers of bisphenol A, with di- and/or polyisocyanates.

5. Process as claimed in claims 2 to 4, characterised in that polyhydroxypolyethers which have been modified by reacting some of the primary hydroxyl groups with monoglycidyl compounds are used.

6. Process as claimed in claims 1 to 5, characterised in that 1,4-diazabicyclo-2,2,2-octane (DABCO) is used as catalyst in a quantity of from 0,04 to 0,08 mol %, based on the NCO groups which are to be reacted.

7. Cationic binders based on optionally modified polyether urethanes, prepared as claimed in claims 1 to 6.

8. Cationic paint binders as claimed in claim 7, characterised in that they have an amine number of from 20 to 150 mg KOH/g and after protonation with 30 to 80 milliequivalents of formic acid or acetic acid per 100 g of solid resin they can be satisfactorily diluted with water.

9. Self-cross-linking paint binders based on optionally modified polyether urethanes, prepared as claimed in claims 1 to 6, characterised in that the blocked isocyanate groups required for urethane cross-linking are introduced by reaction with half-blocked diisocyanates.

10. Use of the cationic binders as claimed in claims 6 and 8, optionally in combination with other binders and/or cross-linking components, preferably blocked di- or polyisocyanates, for the formulation of water-dilutable stoving enamels, particularly cathodically depositable electrodeposition paints.

**Claims for the following Contracting State : ES**

1. Process for preparing cationic paint binders based on optionally modified polyether urethanes, characterised in that
(A) the primary hydroxyl groups of a polyhydroxypolyether which is optionally modified by chain lengthening and optionally contains ester groups
(B) is wholly or partially reacted with an NCO group of a diisocyanate the NCO groups of which have different reactivities, preferably in the presence of an inert solvent, using 0.02 to 0.1 mol %, based on the NCO groups which are to be reacted, of 1,4-diazabicyclo-2,2,2-octane (DABCO) as catalyst, selectively at 30 to 80°C, and subsequently
(C) at 20 to 80°C the free NCO groups are reacted with primary and/or preferably secondary aliphatic amines and optionally
(D) the remaining primary and/or secondary hydroxyl groups are wholly or partially reacted with half-blocked diisocyanates, with the proviso that the proportions of the components are selected so that the end product has a basicity which will ensure that the binder can be satisfactorily diluted with water after protonation.

2. Process as claimed in claim 1, characterised in that the polyhydroxypolyethers used are products which have at least one, preferably at least two primary hydroxyl groups and a molecular weight of at least 200.

3. Process as claimed in claim 2, characterised in that the polyhydroxypolyethers used are reaction products of di- or polyglycidyl compounds with alpha-omega-diprimary diols and/or hydroxycarboxylic acids carrying at least one primary hydroxyl group.

4. Process as claimed in claim 2, characterised in that the polyhydroxypolyethers used are reaction products of alkoxylated phenols, preferably diethylene and/or dipropyleneglycolethers of bisphenol A, with di- and/or polyisocyanates.

5. Process as claimed in claims 2 to 4, characterised in that polyhydroxypolyethers which have been modified by reacting some of the primary hydroxyl groups with monoglycidyl compounds are used.

6. Process as claimed in claims 1 to 5, characterised in that 1,4-diazabicyclo-2,2,2-octane (DABCO) is used as catalyst in a quantity of from 0,04 to 0,08 mol %, based on the NCO groups which are to be reacted.

7. Use of the cationic binders as claimed in claims 1 to 6, optionally in combination with other binders and/or cross-linking components, preferably blocked di- or polyisocyanates, for the formulation of water-dilutable stoving enamels, particularly cathodically depositable electrodeposition paints.

**Revendications**

## EP 0 315 033 B1

**Revendications pour les Etats contractants suivants : DE, FR, GB, IT, SE**

1.  Procédé de préparation de liants cationiques pour peintures à base de polyétheruréthanes éventuellement modifiés, caractérisé en ce que l'on fait réagir totalement ou partiellement de manière sélective entre 30 et 80°C
    (A) les groupes hydroxyle primaires d'un polyhydroxypolyéther éventuellement modifié par allongement de chaîne, présentant éventuellement des groupes ester,
    (B) avec un groupe NCO d'un diisocyanate, dont les groupes NCO sont de réactivité variable, de préférence en présence d'un solvant inerte en utilisant 0,02 à 0,1 mol%, par rapport aux groupes NCO à faire réagir, de 1,4-diazabicyclo-2,2,2-octane (DABCO) en tant que catalyseur, puis
    (C) on fait réagir entre 20 et 80°C les groupes NCO libres avec des amines aliphatiques primaires et/ou de préférence secondaires, et éventuellement
    (D) on fait réagir totalement ou partiellement les groupes hydroxyle primaires et/ou secondaires restants avec des diisocyanates semibloqués, avec la condition que les proportions des composants soient choisies de telle manière que le produit final présente une basicité qui assure, après protonation, une diluabilité à l'eau irréprochable du liant.

2.  Procédé selon la revendication 1, caractérisé en ce que l'on utilise comme polyhydroxypolyéthers des produits qui présentent au moins un, de préférence au moins deux groupes hydroxyle primaires et un poids moléculaire d'au moins 200.

3.  Procédé selon la revendication 2, caractérisé en ce que l'on utilise comme polyhydroxypolyéthers des produits de réaction de composés di- ou polyglycidylés et de diols alpha-oméga-diprimaires et/ou d'acides hydroxycarboxyliques ayant au moins un groupe hydroxyle primaire.

4.  Procédé selon la revendication 2, caractérisé en ce que l'on utilise comme polyhydroxypolyéthers des produits de réaction de phénols alcoxylés, de préférence des diéthylène- et/ou dipropylèneglycoléthers de bisphénol A,et de di- et/ou polyisocyanates.

5.  Procédé selon les revendications 2 à 4, caractérisé en ce que l'on utilise des polyhydroxypolyéthers qui ont été modifiés par réaction d'une partie des groupes hydroxyle primaires avec des composés monoglycidylés.

6.  Procédé selon les revendications 1 à 5, caractérisé en ce que l'on utilise le 1,4-diazabicyclo-2,2,2-octane (DABCO) en tant que catalyseur en une quantité de 0,04 à 0,08 mol%, par rapport aux groupes NCO à faire réagir.

7.  Liants cationiques pour peintures à base de polyétheruréthanes éventuellement modifiés, préparés selon les revendications 1 à 6.

8.  Liants cationiques pour peintures selon la revendication 7, caractérisés en ce qu'ils présentent un indice d'amine de 20 à 150 mg de KOH/g et sont diluables à l'eau de manière irréprochable après protonation avec 30 à 80 milliéquivalents d'acide formique ou d'acide acétique pour 100 g de résine solide.

9.  Liants autoréticulants pour peintures à base de polyétheruréthanes éventuellement modifiés, préparés selon les revendications 1 à 6, caractérisés en ce que les groupes isocyanate bloqués nécessaires pour une réticulation de type uréthane ont été introduits par réaction avec des diisocyanates semibloqués.

10. Utilisation des liants cationiques selon les revendications 6 et 8, éventuellement en combinaison avec d'autres liants et/ou composants de réticulation, de préférence des di- ou polyisocyanates bloqués, pour la formulation de peintures à cuire diluables à l'eau, en particulier de peintures pour trempage électrophorétique précipitables à la cathode.

**Revendications pour l'Etat contractant suivant : ES**

1.  Procédé de préparation de liants cationiques pour peintures à base de polyétheruréthanes éventuellement modifiés, caractérisé en ce que l'on fait réagir totalement ou partiellement de manière sélective entre 30 et 80°C

(A) les groupes hydroxyle primaires d'un polyhydroxypolyéther éventuellement modifié par allongement de chaîne, présentant éventuellement des groupes ester,

(B) avec un groupe NCO d'un diisocyanate, dont les groupes NCO sont de réactivité variable, de préférence en présence d'un solvant inerte en utilisant 0,02 à 0,1 mol%, par rapport aux groupes NCO à faire réagir, de 1,4-diazabicyclo-2,2,2-octane (DABCO) en tant que catalyseur, puis

(C) on fait réagir entre 20 et 80°C les groupes NCO libres avec des amines aliphatiques primaires et/ou de préférence secondaires, et éventuellement

(D) on fait réagir totalement ou partiellement les groupes hydroxyle primaires et/ou secondaires restants avec des diisocyanates semibloqués, avec la condition que les proportions des composants soient choisies de telle manière que le produit final présente une basicité qui assure, après protonation, une diluabilité à l'eau irréprochable du liant.

2. Procédé selon la revendication 1, caractérisé en ce que l'on utilise comme polyhydroxypolyéthers des produits qui présentent au moins un, de préférence au moins deux groupes hydroxyle primaires et un poids moléculaire d'au moins 200.

3. Procédé selon la revendication 2, caractérisé en ce que l'on utilise comme polyhydroxypolyéthers des produits de réaction de composés di- ou polyglycidylés et de diols alpha-oméga-diprimaires et/ou d'acides hydroxycarboxyliques ayant au moins un groupe hydroxyle primaire.

4. Procédé selon la revendication 2, caractérisé en ce que l'on utilise comme polyhydroxypolyéthers des produits de réaction de phénols alcoxylés, de préférence des diéthylène- et/ou dipropylèneglycoléthers de bisphénol A, et de di- et/ou polyisocyanates.

5. Procédé selon les revendications 2 à 4, caractérisé en ce que l'on utilise des polyhydroxypolyéthers qui ont été modifiés par réaction d'une partie des groupes hydroxyle primaires avec des composés monoglycidylés.

6. Procédé selon les revendications 1 à 5, caractérisé en ce que l'on utilise le 1,4-diazabicyclo-2,2,2-octane (DABCO) en tant que catalyseur en une quantité de 0,04 à 0,08 mol%, par rapport aux groupes NCO à faire réagir.

7. Utilisation des liants cationiques selon les revendications 1 à 6, éventuellement en combinaison avec d'autres liants et/ou composants de réticulation, de préférence des di- ou polyisocyanates bloqués, pour la formulation de peintures à cuire diluables à l'eau, en particulier de peintures pour trempage électrophorétique précipitables à la cathode.